# EUROPEAN PATENT APPLICATION

(11) **EP 2 252 056 A2**
(43) Date of publication of application: **17.11.2010**
(21) Application number: 10162785.9
(22) Date of filing: 13.05.2010
(51) Int. Cl.: H04N 7/173, H04N 5/445

(54) **Method for providing information relating to objects shown in a video**

(30) Priority: 13.05.2009 IT MI20090827
(71) Applicant: TXT Polymedia S.p.A., 20126 Milano (IT)
(72) Inventor: Pirovano, Tullio, 20059, Vimercate (MI) (IT); Tornielli, Giorgio, 27036, MORTARA (PV) (IT); Vitali, Leandro, 20099, Sesto San Giovanni (MI) (IT)
(74) Representative: Di Bernardo, Antonio

(57) **Abstract**

The invention relates to a method for providing information relating to objects shown in a video, wherein a video playback system receives a television signal containing the video and reproduces it. The video playback system retrieves the information to be provided to the user from a data packet of the television signal, and comprises a software application which, when it receives a command from the user (101), compares the time instant at which the command has been received with at least one time interval associated with the video (102). Based on the comparison (103), the software application selects the information to be provided to the user.

The invention also relates to a video processor and an associated video playback system implementing the method.

## Description

The present invention relates to a method for obtaining information about objects shown in a video according to the preamble of claim 1.

In particular, the invention relates to a method for allowing the purchase of objects shown in a video, such as, for example, a video played through the Internet or a video broadcast as a content of a television signal or read from a storage medium, whether optical, magnetic or the like, or anyway coming from any other source.

Patent application US2005/0022226 discloses a system and a method which offer the possibility of purchasing products shown in a video loaded on a video medium such as a DVD.

The video medium contains a video (e.g. a movie) with which commands are associated which are executed by the media reader (e.g. a DVD reader) when products on sale are displayed.

The reader executes the commands and indicates to the user that a displayed product can be purchased. When a product on sale is displayed, an indicator appears on the screen to inform the user that the product is on sale.

The reader waits for the user to respond and then enters the product into a list of products of interest, after which the user can choose which products to buy and make the purchase by opening a connection to an e-commerce site.

Although effective, this solution suffers from the drawback that it requires a large number of commands as the video is being played; this is because a dialog box for communicating with the user must be displayed for each product.

Besides keeping the video reader's processor busy, such commands may cause a large number of images (e.g. writings or logos) to be superimposed on the video, thus being detrimental to the vision of the video itself.

In particular, this is annoying because a dialog box must be displayed for each object on sale.

The need of displaying one window for each product also limits the system to the sale of a small number of products.

If several objects potentially on sale are shown in one scene of the video, then there will be just two possibilities: either a window is made to remain active for a short time (thus giving the user little time to choose whether or not to purchase the product) or a large number of dialog boxes are displayed, each allowing the user to buy one object or put it into the shopping cart (which is rather annoying).

Also, this solution does not allow to have information about the object on sale immediately available (e.g. its price); such information is only provided at the end of the video or by opening a parallel connection to an e-commerce site.

This implies the drawback that whoever is interested in getting information about a particular product shown in the video will have to stop watching the video or wait for it to end.

The object of the present invention is to provide an alternative solution which allows to get information relating to objects shown in a video.

In particular, the invention aims at improving the user's capacity of interaction with the video, in particular by avoiding the visualization of images superimposed on the video if they are not of interest for the user or have not been requested by the latter.

The present invention also aims at reducing the computing and storage capacity required for the system that plays the video.

It is a further object of the present invention to allow the user to obtain information about objects shown in the video without having to stop watching it.

These and other objects are achieved through a method, a computer program and a video processor incorporating the features set out in the appended claims, which are intended as an integral part of the present description.

The present invention is based on the idea of giving the user the possibility of obtaining information relating to objects shown in the video in response to a command issued by the user him/herself.

Unlike the automatic execution of trigger commands known from patent application US2005/0022226, this solution allows to reduce the number of commands to be executed by the reader, and avoids the visualization of unrequested images which would interfere with the visualization of the video.

Preferably, upon a user command information is displayed about a plurality of objects shown in the video, e.g. products on sale. There is thus no need of displaying a dialog box for each product, since a multi-product dialog box can be used, e.g. a menu of objects among which the user can make a selection.

In a preferred embodiment, such information is kept active even when the object is no longer visible; in this way, the user is given more time to obtain the information of interest, compared to the solutions of the prior art.

Advantageously, the user can set how long the information must remain active, so that he/she can autonomously choose a compromise between the annoyance caused by the presence of information on the display and the necessity of obtaining all the desired information.

In a preferred solution, the selection of the information to be provided to the user is made by the video processor (e.g. a computer, CD-DVD reader, television set or set-top box) based on the time instant at which the user command is received.

In particular, the selection of the information takes place by comparing the time instant at which the user command has been received with a list of time intervals with which information about objects and/or products displayed in the corresponding time intervals are associated.

In a further advantageous embodiment, the video to be played is a content of a television signal preferably transmitted in broadcast mode, e.g. in the DVB (Digital Video Broadcasting) format.

In the following description, the phrase "signal in DVB format" will refer to a signal created in accordance with any one of the DVB standards such as, for example, DVB-T, DVB-S, DVB-C, DVB-H, or with the subsequent versions of said standards, i.e. DVB-S2, DVB-T2 and DVB-C2, whether already or still being defined.

In this embodiment, the data which allows the playback system to display the information of interest is inserted into a data packet transmitted along with the video signal.

In particular, the playback system is equipped with an MHP application which, when it receives a DVB signal, retrieves the information from the data packet of the video signal and reacts to commands issued by the user, e.g. by means of a remote control.

Further objects and advantages of the present invention will become apparent from the following description and from the annexed drawings, which are supplied by way of non-limiting example, wherein:
Fig. 1 shows a video playback system according to the invention;
Fig. 2 is a diagram that shows the steps of a method according to the invention;
Fig. 3 shows a table used for selecting the information to be displayed according to the invention;
Fig. 4 shows a playback system alternative to the one of Fig. 1.

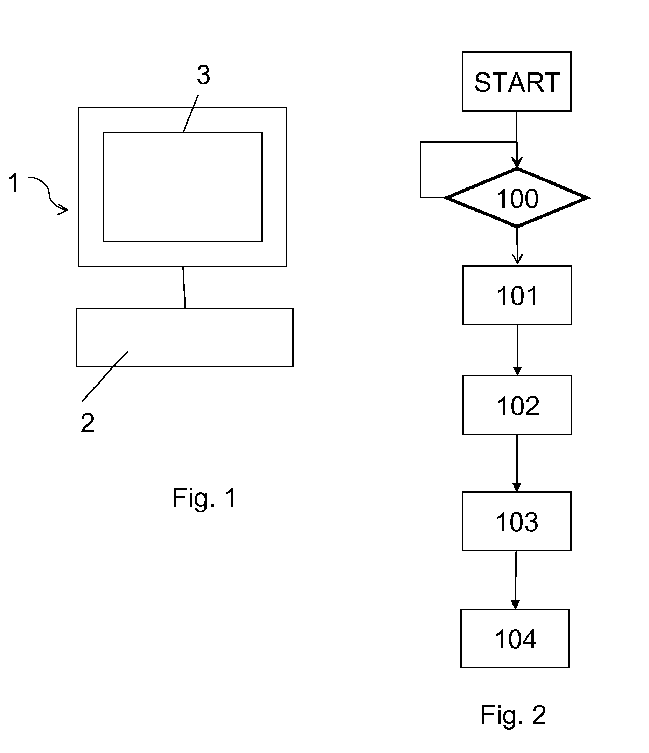

Fig. 1 shows a video playback system 1 that comprises a video processor 2 and a screen 3. The video processor 2 processes the data received or residing in a memory area of its own, and generates a video signal which is displayed on the screen 3.

For this purpose, the video processor may be fitted with an optical media reader, e.g. a DVD or CD or BLUE-RAY reader, or a mass memory (e.g. a hard disk) where to store (e.g. in DVDx or MPEG format or the like) the data wherein the video to be displayed is encoded.

The data containing the video may be loaded locally into the video processor, e.g. through a USB key, or be received remotely, e.g. through an Internet connection.

In a preferred embodiment, the processor 2 is a PC; as an alternative, the processor 2 may be a set-top box that receives television signals, preferably DVB signals.

The processor 2 and the screen 3 may either be separate units or be integrated into a single device, e.g. a notebook or a television set.

For simplicity and clarity, the embodiment example described below with reference to Fig. 1 will consider the case wherein the video processor 2 is a personal computer.

The latter includes a software application which is executed when the video is played.

The operation of the application will now be described with reference to the diagram of Fig. 2.

The application is run when the video starts (START); as the latter is being played, the application waits (step 100) for user commands, e.g. a click with the mouse or the pressing of a keyboard key.

In the meantime, a counter keeps track of the video playback time, i.e. the time elapsed since the video was started.

When the application receives a command from the user, it records the time instant at which said command has been received (step 101) and compares it (step 102) with an information group contained in a memory area (in particular, a look-up table), which comprises information about some objects displayed in the video.

The term "look-up table" will refer below to any memory area containing pieces of information which can be re-connected together into a table-like structure through appropriate code instructions of a processor. In this sense, the term "table field" will refer to a memory area, and the term "table record" will refer to instructions and logic connections among appropriate memory areas (fields of one record).

Thus, the expression "to verify the information in a table" or "to read the records of a table" will mean to execute appropriate code instructions which provide orderly access to certain memory areas.

Once the software application has recorded the user command, it then verifies which objects are being displayed at that given time instant and selects the information to be provided to the user (step 103).

Subsequently, the software application generates (step 104) a signal for the monitor in order to display the selected information on the screen 3.

In an alternative embodiment of the present invention, one or more time intervals are associated with each object, said time intervals corresponding to as many time intervals of the video during which the object is shown to the user.

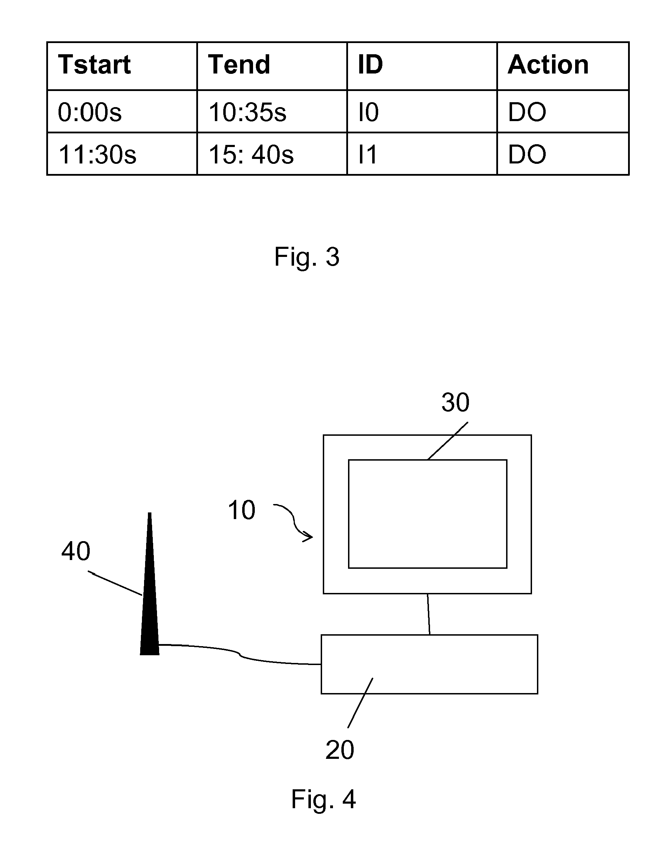

In an alternative embodiment shown in Fig. 3, the look-up table contains a plurality of records, each associated with a different time interval Tstart-Tend.

In this solution, each record, i.e. each time interval, is associated with an identification code ID with which different objects and the related information to be displayed are associated.

In the example of Fig. 3, the table contains two records relating to two distinct time intervals, of which the first one ranges from 0 to 10.35 seconds (s) and the second one ranges from 11 to 15.40s.

In the example of Fig. 3, the times Tstart and Tend defining the start and the end of the time interval are relative time instants, i.e. they are calculated starting from the beginning of the video.

The first time interval corresponds to the first 10.35s of the video, and is associated with the identification code I0 and the action "DO".

When it receives a user command within the first 10.35 seconds, the video processor 2 verifies in the table of Fig. 3 which code is associated with said time interval and acts in accordance with the action contained in the field ACTION, which in this case is the action "DO".

This action preferably corresponds to retrieving and displaying the information associated with the identification code I0.

Alternatively, the action ACTION may be different and provide for tracing the information of interest, e.g. by storing identification codes selected from the table at each user command, or by adding a flag to the field selected in response to the user command, or by collecting information into a memory area associated with a list of objects of interest.

The information is not therefore displayed immediately; the visualization thereof may be delayed to a later time instant, e.g. the end of the video, or it may occur upon a subsequent user command.

This latter solution appears to be particularly advantageous, in that the user can decide when to see the information relating to certain objects of his/her interest.

The information of interest associated with the objects shown may be of various types and may include commercial information (e.g. price) and information about the object features (e.g. materials and technical specifications).

Preferably, the object-related information is shown in dialog boxes where the user can move from one object to another or through the various fields by means of which the information is presented.

In one embodiment, the dialog box is provided in the form of a menu where the objects displayed can be browsed.

In particular, the dialog box allows the user to move the objects into a list of objects to buy. In the preferred embodiment, the user is given the possibility of opening and closing the dialog boxes, so that he/she can decide when and how long they are to remain active.

The video processor 2 is preferably equipped with means for connecting to a remote server, in particular to an Internet service provider, such that an Internet connection is made available. In this case, the user can buy the objects by connecting to an e-commerce site through a link provided in the dialog box.

In order to improve the man-machine interface, the dialog boxes are superimposed in transparency on the video, so that the user can gain access to the object-related information without necessarily having to stop watching the video.

In the example of Fig. 4, the video processor is a set-top-box 20 capable of receiving television signals, in particular digital television signals, from an antenna 40, and of reproducing them on a television set 30.

By way of non-limiting example, the digital television signals may be of the DVB type, in particular DVB-T or DVB-S type, i.e. compliant with one or more of the following standards: ETSI EN 300 468 V1.9.1 (2009-03) "Digital Video Broadcasting (DVB); Specification for Service Information (SI) in DVB systems"; ETSI ETS 300 744 ed.1 (1997-03) "Digital Video Broadcasting (DVB); Framing structure, channel coding and modulation for digital terrestrial television"; ETSI ETR 154 ed.3 (1997-09) "Digital Video Broadcasting (DVB); Implementation guidelines for the use of MPEG-2 Systems, Video and Audio in satellite, cable and terrestrial broadcasting applications"; Digital Video Broadcasting (DVB); ETSI ES 201 812 V1.1.2 (2006-08) "Multimedia Home Platform (MHP) Specification 1.0.3".

It is however apparent that the television signals may be structured and broadcast in accordance with different standards (e.g. those defined by the Advanced Television Systems Committee) or dedicated communication protocols.

The set-top-box 20 is equipped with a software application capable of executing the functions described above with reference to Figs. 2 and 3.

The software application may be either broadcast along with the television signals or be loaded locally, whether during the production stage or after the product has been sold, by connecting a computer or a mass memory (e.g. a USB key) to the set-top-box.

In the case of digital television signals, in particular of the DVB type, the software application can preferably be broadcast by radio and received by the receiver, which takes it from the Object Carousel distributed along with the television signal according to the DVB standards, in particular to the aforementioned DVB standards.

In the example of Fig. 4, the video playback system 10 comprises a television signal receiver 20 provided with an antenna 40 for receiving television signals, and a screen 30 for reproducing the video received through the television signal.

In a preferred embodiment, the screen 30 is a part of the television set, and the receiver 20 is a set-top-box connected to said television set; the receiver 20 may nevertheless be built in the television set.

Preferably, the software application is an MHP application, and the television signals are of the DVB-T type.

In compliance with the MHP standard, for example, the application is preferably, but not necessarily, written in the JAVA language and uses application interfaces (APIs) for handling the video signal and the resources provided by the receiver (e.g. set-top-box), such as local storage, Internet interface, etc.

Preferably, the software application is distributed to a plurality of receivers 20 on the television channel where there is the video content for which the application allows to obtain information about objects shown therein.

As an alternative, the software application may be simultaneously associated with multiple channels and allow for the visualization of information relating to objects shown in video contents broadcast on different television channels (e.g. RAI 1 and Canale 5).

In order to operate correctly, the software application needs some data, including the list of the objects shown in the video and about which the user is given the possibility of getting information, as well as the information associated with such objects (e.g. image, description, price, etc.)

This data is preferably distributed cyclically along with the video signal, so that, even if the receiver is tuned on the channel after the video has begun, it will still have the possibility of retrieving the data and use it for providing the associated information to the user.

In addition to the object-related information, the data broadcast along with the video signal also includes a look-up table which allows an event to be associated with one or more objects.

Said table is preferably of the type previously described, in particular with reference to Fig. 3.

Such data is preferably broadcast within the Object Carousel and is loaded by the application when it is started.

In a first embodiment, the video is processed during a post-production stage by permanently inserting appropriate event signals into the video, e.g. StreamEvents, at the time instants corresponding to the products available for purchase.

Alternatively, for instance in the case of live events, where the video cannot be processed at a post-production stage, it is conceivable to employ a back-end system which allows event signals (e.g. StreamEvents for DVB signals) to be entered dynamically into the transmission stream.

These event signals (whether inserted in the video or in the transmission stream) are recognised by the software application as new events to which it is necessary to react, for example by making a particular function available to the user as previously described.

In particular, when the application recognises a new event, it verifies in the table which object(s) it corresponds to and, if the user decides to put that (those) product(s) into a list of products of interest, called "wish-list", by pressing an appropriate remote control button, then the corresponding product(s) will be added to the wish-list.

As described above, entering products into this wish-list does not necessarily involve the visualization of dialog boxes.

As in the example described above with reference to Fig. 2, putting products into said list of products of interest may simply consist of recording the identification codes of the products selected by the user by issuing the appropriate command, or adding an interest indicator (such as a flag) into the table.

Preferably, dialog boxes are opened in order to obtain information about, and possibly buy, the displayed objects only upon a subsequent command issued by the user, e.g. pressing a coloured button of the remote control other than that previously used for putting the product into the wish-list.

It is apparent that many variations may be made by those skilled in the art to the embodiment examples described above with reference to Figs. 1 to 4.

Although in the example of Fig. 3 the time instants Tstart and Tend are relative time instants, it is clear that they may also be absolute time instants expressed in hours, minutes and seconds, and such as to define a time interval.

The information about the objects shown in the video may be stored either in the same medium containing the software application or in a different memory area. In its turn, the latter may be included in the video processor 2 or be accessible through a remote connection; in particular, the information may be retrieved through an Internet connection or be received through a radio transmission, such as the transmission of television signals. Likewise, the information of the look-up table may be subdivided into one or more tables, e.g. referring to different scenes or time intervals of the video.

This solution appears to be particularly advantageous in the case wherein the data containing the object-related information and the look-up table are transmitted remotely, either by radio or by cable, since it reduces band occupation and facilitates the transmission of both the data and the table.

Furthermore, if in certain video scenes or time intervals no user commands have been received, then the video processor can clear the tables received previously, thereby freeing memory area which otherwise would remain occupied.

In another embodiment, which appears to be particularly advantageous when the video is a content of a television signal, the look-up table may not contain the information about the time intervals in which the video shows the objects about which the user is given the possibility of getting information.

This solution uses a plurality of tables, each associated with one or more scenes, i.e. different time intervals, of the video.

Each of these tables only contains information about the objects displayed in the scene or time interval with which the table is associated.

When the user sends a command to the video processor (e.g. the set-top-box 20 of Fig. 4 or the PC 2 of Fig. 1), the latter records the user's interest for the information about the objects contained in the table associated with the scene being played when the user command has been received.

Such information, as described above, may be displayed immediately or upon reception of a second user command.

This solution appears to be particularly advantageous when the table is transmitted remotely, e.g. when the table is transmitted in a data packet associated with the television signal containing the video to be played.

In this case a greater number of tables are transmitted, but they are much smaller and more easily transmissible.

When the television receiver receives the user command indicating that the user is interested in getting information about some displayed objects, the receiver retrieves the information of the last table received.

This variant offers the advantage of simplifying the processing required in the video receiver/player, thus accelerating the reaction times thereof.

Finally, it is apparent that, although the above-described examples refer to tables used for collecting the information in an orderly manner, such tables may nonetheless be replaced with any other information organizing method or system.

While the use of tables is preferable, the information necessary for the operation of the above-described software application and for the implementation of the method according to the present invention may nevertheless be grouped differently and transmitted as information groups associated with time intervals or scenes of the video.

Any reference made above to look-up tables (e.g. the possibility of transmitting more than one table or to include indications relating to time intervals of the video) is therefore also applicable to information groups used in association with or as a substitute for such tables.

## Claims

1. Method for providing information relating to objects shown in a video, wherein a video playback system receives a television signal containing said video and reproduces said television signal, and wherein information is provided about objects shown in the video being played in response to a user command,
the method being **characterized in that** the video playback system retrieves the information to be provided to the user from a data packet of the television signal,
and that said playback system comprises a software application adapted to:
- receive said user command (101),
- compare the time instant at which said first command has been received with at least one time interval associated with said video (102),
- select said information based on the comparison (103).

2. Method according to claim 1, wherein said information is grouped into a plurality of information groups associated with different time intervals of the video, and wherein said information to be provided to the user is selected from the information contained in the last information group received prior to said user command.

3. Method according to claim 1 or 2, wherein said information is grouped into a plurality of information groups associated with different time intervals of the video, and wherein an information group contains at least one time interval associated with said video.

4. Method according to claim 3, wherein said information group contains at least one code adapted to identify at least one object displayed in said video, so that said information is selected within said information group according to said code.

5. Method according to any of claims 1 to 4, wherein a dialog box containing said information is displayed in response to said command, said dialog box containing in particular information about a plurality of objects shown in said video, said dialog box being preferably a menu of objects selectable by the user.

6. Method according to any of claims 1 to 5, wherein the selected information is traced, and wherein the selected information is provided to said user upon a second command issued by said user.

7. Method according to claim 6, wherein a dialog box containing said information is displayed in response to said second command, said dialog box containing in particular information about a plurality of objects shown in said video, said dialog box being preferably a menu of objects selectable by the user.

8. Method according to claim 5 or 7, wherein the user chooses how long the displayed information will remain visible.

9. Method according to any of the preceding claims, wherein said software application is an MHP application.

10. Method according to claim 9, wherein said data packet is the Object Carousel.

11. Computer program, **characterized by** comprising code portions adapted to, when executed, implement the method according to any of claims 1 to 10.

12. Video processor comprising a computer program according to claim 11.

13. Processor according to claim 12, wherein said processor is a television signal receiver, and wherein said input signal is a digital signal.
